# EUROPÄISCHE PATENTSCHRIFT

(11) **EP 3 190 865 B1**
(45) Veröffentlichungstag und Bekanntmachung des Hinweises auf die Patenterteilung: **02.01.2019**
(21) Anmeldenummer: 15775081.1
(22) Anmeldetag: 04.09.2015
(51) Int. Cl.: A01B 63/10, A01B 63/22

(54) **HYDRAULISCHE STELLEINRICHTUNG**
HYDRAULIC CONTROL DEVICE
ACTIONNEUR HYDRAULIQUE

(30) Priorität: 12.09.2014 DE 102014113223
(43) Veröffentlichungstag der Anmeldung: 19.07.2017
(73) Patentinhaber: Lemken GmbH & Co. KG, 46519 Alpen (DE)
(72) Erfinder: PAULESSEN, Georg, 47877 Willich (DE); DIEPERS, Clemens, 47647 Aldekerk (DE); EIRMBTER, Dennis, 47877 Willich (DE)
(86) Internationale Anmeldenummer: PCT/DE2015/100381
(87) Internationale Veröffentlichungsnummer: WO 2016/037608

(56) Entgegenhaltungen:
- EP-A2- 0 224 774
- EP-A2- 2 286 649
- WO-A1-2004/051136
- DE-A1- 2 537 391

## Beschreibung

Die Erfindung betrifft eine hydraulische Stelleinrichtung gemäß dem Oberbegriff des Patentanspruches 1.
Es ist eine Vielzahl verschiedenster landwirtschaftlicher Geräte bekannt, welche über hydraulische Zylinder Einstell- oder Klappfunktionen vollziehen. Ein solches Gerät wird beispielsweise in der deutschen Patentanmeldung DE 2 537 391 A1 vorgestellt. Ein das Gerät ziehender Traktor bildet dabei die hydraulische Druckmittelversorgung für das Gerät. Schieberventile, welche traktor- oder geräteseitig angeordnet sind, leiten den Fluidstrom von der Druckmittelversorgung in die einzelnen Hydraulikzylinder oder zurück. Um beispielsweise eine rechte und linke Gerätehälfte synchron zu verstellen oder zu klappen, sind Mengenteiler vorgesehen, welche die Hydraulikzylinder mit gleichen Fluidstrommengen versorgen und einen annähernden Gleichlauf der Hydraulikzylinder bewirken. Die hier dargestellten, strömungsbasierten Mengenteiler unterliegen jedoch einer Leckageungenauigkeit. Dieser Ungenauigkeit kann man beispielsweise mit einem Zahnradmengenteiler begegnen, welcher aber erheblich teurer zu beschaffen ist. Für bestimmte Gleichlaufanwendungen sind auch Master-Slave-Schaltungen mit Hydraulikzylindern bekannt, bei dem ein erster, doppelt wirkender Hydraulikzylinder auf der Kolbenbodenseite mit Druck beaufschlagt wird. Das auf der Kolbenringseite verdrängte Fluidvolumen betätigt einen zweiten Hydraulikzylinder, welcher entsprechend kleiner dimensioniert ist. Entspricht die Kolbenbodenseitenfläche des zweiten Zylinders der Kolbenringseitenfläche des ersten Zylinders, wird eine Bewegung der Zylinder im Gleichlauf erreicht. Hierfür müssen jedoch unterschiedliche Zylindergrößen in einem Gerät vorgehalten werden, wobei die Zylinder nur unterschiedliche Betätigungskräfte bewirken können. Die europäische Patentanmeldung EP 2 286 649 A2 stellt ein Bodenbearbeitungsgerät mit einer Master-Slave-Schaltung vor.

In einem anderen Zusammenhang, nämlich der zwangsweisen Verteilung von Schmierfett, sind der Fachwelt Progressiv-Verteiler bekannt. Die Offenlegungsschrift EP 224 774 A2 beschreibt einen solchen Verteiler, ebenso die US-Patentschrift 4 105 094 in einer alternativen Bauweise.
Die WO 2004/051136 A1 zeigt einen Progressivverteiler mit verschiebbaren Kolben, aus dessen Auslässen bei konstruktiv geringem Aufwand unterschiedliche Schmierstoffvolumina abgegeben werden können.

Aufgabe der vorgestellten Erfindung ist es, eine kostengünstige und kompakte Stelleinrichtung zur parallelen und annähernd synchronen Betätigung mehrerer Hydraulikzylinder bereitzustellen, welche besonders für kleine Verstellbewegungen geeignet ist.

Diese Aufgabe wird durch die Merkmale des kennzeichnenden Teiles des Anspruches 1 gelöst. Durch Verwendung eines Progressiv-Verteilers, welcher als Serienprodukt aus der Schmierstoffdosierung und -verteilung bekannt und günstig zu beschaffen ist, ergibt sich auf verblüffend einfache Weise eine hydraulische Schaltungsmöglichkeit zur gleichmäßigen Ansteuerung und Verstellung mehrerer Hydraulikzylinder. Durch die in den Progressiv-Verteiler integrierte Folgeschaltung dosieren kleine Verteilkolben unter Druck nacheinander kleine Fluidmengen in die jeweiligen Hydraulikzylinder. Diese ändern nacheinander in kleinen Inkrementen ihren Zylinderhub, wobei die theoretische Hubabweichung der an den Progressiv-Verteiler angeschlossenen Hydraulikzylinder dem Hubvolumen eines einzelnen Verteilkolbens des Progressiv-Verteilers entspricht und eine hinreichende Verstellgenauigkeit im Millimeterbereich abbildet, wie sie bei Stellantrieben in landwirtschaftlichen Geräten meist üblich ist.

Durch Verbindung von zumindest zwei Anschlüssen der Verteilereinrichtung miteinander sowie mit einem Hydraulikzylinder in einer Parallelschaltung kann das von mehreren Verteilkolben verdrängte Fluidvolumen in einem Hydraulikzylinder zusammengeführt werden. Da handelsübliche Progressiv-Verteiler mitunter über mehr als zwei Ausgangsanschlüsse verfügen, können beispielsweise bei vier Ausgängen minimal zwei Hydraulikzylinder im Semi-Gleichlauf angesteuert werden.

Durch Verbindung der Hydraulikzylinder über Rückschlag- oder Sperrventile im Bypass zur Verteilereinrichtung mit der Druckmittelversorgung können die Hydraulikzylinder bei Entlastung des Hydraulikdrucks auf einfache und schnelle Art in ihre Ausgangslage zurückgeführt werden. Danach kann die parallele Gleichlaufverstellung der Hydraulikzylinder über den Progressiv-Verteiler erneut beginnen.

Indem man die Verteilereinrichtung als hydraulischen Progressiv-Verteiler mit zumindest zwei Verteilkolben in einer Folgeschaltung ausführt, wobei die Verteilkolben durch eine mechanische oder eine andere, adäquate Zwangssteuerung gegen eine gleichzeitige Verteilbewegung gesichert sind, erreicht man eine Möglichkeit zur Reversierung der parallelen Gleichlaufverstellung, indem die Verteilkolben des Progressiv-Verteilers unter Druck der Zylinder jeweils definierte kleine Fluidmengen im umgekehrten Prinzip aus den Hydraulikzylindern zentral zur Druckmittelversorgung abführen. Dort wird das Fluid beispielsweise in einem Tank oder einem anderen geeigneten Reservoir gespeichert.

Durch Einschränkung der Hubbewegung der Verteilkolben des hydraulischen Progressiv-Verteilers mit variablen oder einstellbaren Endanschlägen können den einzelnen Hydraulikzylindern unterschiedliche, definierte Fluidmengen zugeteilt werden. Hierdurch kann ein unterschiedliches Übersetzungsverhältnis der einzelnen Zylinderhübe zueinander oder ein Gleichlauf von Zylindern mit unterschiedlichem Kolbendurchmesser erreicht werden.

Wird die Verteilereinrichtung zwischen Druckmittelversorgung und Hydraulikzylindern zumindest teilweise als Kaskade von mehreren Progressiv-Verteilern gebildet, so kann eine Vielzahl von Hydraulikzylindern erfindungsgemäß angesteuert werden. Durch Anschluss eines weiteren Progressiv-Verteilers am Ausgang eines ersten Progressiv-Verteilers multiplizieren oder vervielfachen sich die Verteilerausgänge. Eine entsprechend hohe Anzahl von Hydraulikzylindern kann angeschlossen werden. Dabei empfiehlt sich eine symmetrische Anordnung der Kaskaden- oder Reihenschaltung von Verteilern.
Durch Verwendung von zumindest zwei der Hydraulikzylinder, welche als doppelt wirkende Hydraulikzylinder ausgebildet sind und mit einer Druckmittelversorgung derart in Verbindung stehen, dass zumindest die Kolbenbodenseiten oder die Kolbenringseiten der Hydraulikzylinder mit einer Verteilereinrichtung verbunden sind, wird ein doppelt wirkender, erfindungsgemäßer Zwanglauf der hydraulischen Stelleinrichtung erreicht.

Versieht man die Hydraulikzylinder, welche als doppelt wirkende Hydraulikzylinder ausgebildet sind, auf der Kolbenbodenseite und / oder der Kolbenringseite mit einem Endlagenventil, welches in einer Endlage des Hydraulikzylinders die Kolbenbodenseite und die Kolbenringseite hydraulisch miteinander verbindet, wird eine automatische Endlagenjustierung bei eventuell auftretenden Leckagen nach Anfahrt einer Endlage der Stelleinrichtung zwischen den Hydraulikzylindern automatisch kompensiert, bis alle Zylinder ihre Endlage erreicht haben.

In einer besonders sicheren Erfindungsausführung stehen die Kolbenbodenseiten und /oder die Kolbenringseiten der doppelt wirkenden Hydraulikzylinder über eine Verteilereinrichtung oder direkt mit einer Druckmittelversorgung in Verbindung, wobei zumindest ein entsperrbares Rückschlagventil zwischen zumindest einem Zylinder und der Verteilereinrichtung und / oder der Druckmittelversorgung angeordnet ist. Durch diese Schaltungsanordnung ist auch bei unvorhergesehenen Lasten auf die Hydraulikzylinder oder plötzlichem Druckabfall eine definierte und kontrollierte Bewegung der Stelleinrichtung oder ein sicherer Zustand stets gewährleistet. Ungewollte Zylinderbewegungen, wie sie beispielsweise bei Zylinderkavitation auftreten, werden hiermit wirksam vermieden.

Durch Ausführung von zumindest einem Hydraulikzylinder als Memory-Zylinder mit schwimmendem Kolben oder als Doppelzylinder mit einer gemeinsamen Kolbenstange kann der Hydraulikzylinder zwei Stellbewegungen unabhängig voneinander vollziehen, beispielsweise einer erfindungsgemäßen Stellbewegung und einer weiteren, davon unabhängigen Hubbewegung zum Wechsel eines Gerätes von Arbeits- in Transportstellung.

Durch Ausstattung von zumindest einem Hydraulikzylinder mit einem Wegmesssystem, welches mit einer Anzeige-, Steuer- oder Regelvorrichtung in Verbindung steht, kann die erfindungsgemäße Stelleinrichtung überwacht oder die Stellbewegung in einem Steuer- oder Regelkreis als eine Eingangsgröße zurückgeführt werden.

Wird zumindest ein Verteilkolben eines Progressiv-Verteilers mit einem Bewegungsmesssystem versehen, welches mit einem Zählwerk, einer Anzeige-, Steuer- oder Regelvorrichtung in Verbindung steht oder ein solches bildet, so kann der detektierte oder gemessene Hub von zumindest einem Verteilkolben zur Bestimmung des verdrängten Fluidvolumens des Progressiv-Verteilers herangezogen werden. Dieses Fluidvolumen bildet als Absolutwert oder über die Zeit ebenso ein Maß für den Verstellweg oder die Verstellgeschwindigkeit der erfindungsgemäßen Vorrichtung.

Insbesondere hat sich die vorgeschlagene Stelleinrichtung in einem landwirtschaftlichen Gerät für eine segmentweise Druck- oder Tiefeneinstellung der Arbeits-, Ausbring- oder Tiefenführungseinrichtungen oder aber der Klapp- oder Falteinrichtung eines solchen Gerätes bewährt. Hier ist beispielsweise die parallele Ansteuerung von über die Gerätebreite verteilten Druck- oder Packerrollen, Transporträdern, Sä- oder Lockerungsscharen, ebenso aber auch das sequenzielle oder symmetrische Klappen eines Maschinenrahmens oder eines Verteilgestänges zu nennen, welches unter Einsatz von einfach oder doppelt wirkenden Hydraulikzylindern erfolgt.

Bei Verwendung der erfindungsgemäßen Stelleinrichtung in einem Pflug zur parallelen Schnittbreitenverstellung mehrerer, schwenkbar zum Pflugrahmen angeordneter Pflugkörper, wobei die Pflugkörper mittels Hydraulikzylinder zum Rahmen abgestützt sind, kann auf eine mechanische Kopplung der Pflugkörper zur Erlangung eines Gleichlaufes verzichtet werden. Bei geschickter Auswahl von entsprechend dimensionierten, weiteren Hydraulikzylindern zur Verstellung der Vorderfurchenbreite oder des Zugpunktes des Pfluges können diese ebenfalls mit der Verteileinrichtung verbunden werden. Durch Auswahl oder Kombination unterschiedlicher Fördervolumina der Verteileinrichtung für die Hydraulikzylinder zur Pflugkörperverstellung und die anderen Hydraulikzylinder können verschiedene Übersetzungsverhältnisse zwischen diesen Zylindern eingestellt oder gewählt werden, wie sie für eine exakte Pflugeinstellung erforderlich sind.

Die Erfindung zeichnet sich insbesondere dadurch aus, dass durch die Verwendung von kostengünstigen Progressiv-Verteilern mehrere Hydraulikzylinder zu einem Gleichlaufverband zusammengeschaltet werden können. Durch diese Schaltungsform wird ein zwangsweiser Gleichlauf oder Semigleichlauf der Hydraulikzylinder erreicht. Dabei findet die Zylinderbewegung in kleinen Inkrementen statt, und zwar unabhängig von den auf die Zylinder wirkenden bzw. von diesen erzeugten Kräften. Durch Nutzung oder Kombination verschiedener Dosiervolumina eines Progressiv-Verteilers können auch unterschiedliche Übersetzungsverhältnisse zwischen den einzelnen Hydraulikzylindern eingestellt werden. Insbesondere die einfache Detektion der Verteilkolbenbewegung eines Progressiv-Verteilers ermöglicht zudem eine einfache, aber hinreichend genaue Bestimmung der einzelnen Verfahrwege der Hydraulikzylinder.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine erfindungsgemäße Gleichlaufschaltung zweier Hydraulikzylinder,
Fig.2 eine erfindungsgemäße Gleichlaufschaltung mehrerer doppelt wirkender Hydraulikzylinder und
Fig.3 ein vereinfachtes Schema eines Progressiv-Verteilers in 4 Ansichten.

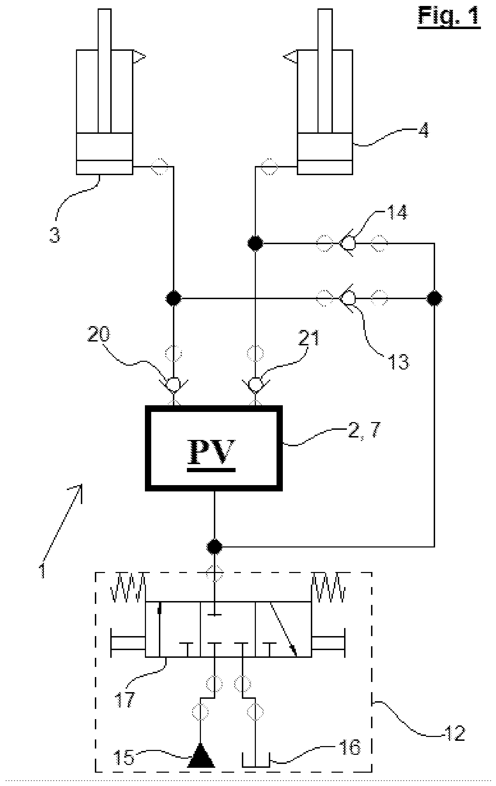

Figur 1 beschreibt den prinzipiellen Aufbau einer erfindungsgemäßen Schaltung der Stelleinrichtung 1. Die Zu- und Abfuhr eines unter Druck stehenden Fluides, vorzugsweise Hydrauliköls, erfolgt über die Druckmittelversorgung 12. Dabei ist die Druckmittelversorgung Bestandteil eines Traktors, die restlichen Schaltungskomponenten sind Bestandteil eines landwirtschaftlichen Gerätes. Die Druckmittelversorgung 12 besteht aus einer Pumpe 15, einem Tank 16 oder geeignetem Reservoir sowie einem Mehrwegeventil 17 zur Steuerung des unter Druck stehenden Fluidstromes. Die Druckmittelversorgung 12 oder ihre Bestandteile können einem Traktor, ebenso aber auch dem Gerät zugeordnet sein und sogar über eine eigene, unabhängige Energieversorgung verfügen. Wird der Ventilschieber des Mehrwegeventils 17 in Fig. 1 aus der dargestellte neutralen Mittelstellung nach rechts bewegt, fließt ein Fluidstrom in den Eingang einer Verteilereinrichtung 2, welche hier als einzelner Progressiv-Verteiler 7 dargestellt ist. Verfügt der Progressiv-Verteiler 7 beispielsweise über vier Ausgänge, so sind jeweils zwei Ausgänge zusammengeschaltet mit jeweils einem einfach wirkenden Hydraulikzylinder 3, 4 verbunden. Ebenso können die Verdrängkammern der Verteilkolben des Progressiv-Verteilers 7 intern zusammengeschaltet werden, so dass beispielsweise nur zwei Ausgänge aus dem Progressiv-Verteiler 7 hervortreten. Optional sind die Ausgänge des Progressiv-Verteilers 7 zu seiner Entlastung mit Rückschlagventilen 20, 21 versehen. Die Verteilkolben des Progressiv-Verteilers 7 bewegen sich unter Druck des Fluidstromes zwangsweise nacheinander hin und her und verdrängen jeweils eine kleine, definierte Fluidmenge wechselweise und nacheinander in die Ausgänge und den angeschlossenen linken Hydraulikzylinder 3 oder rechten Hydraulikzylinder 4. Entsprechend dem zugeteilten Fluidvolumen fahren die beiden Hydraulikzylinder 3, 4 in kleinen Schritten wechselweise aus. Hierdurch ist eine lastunabhängige Gleichlaufschaltung der beiden Hydraulikzylinder 3, 4 erreicht, deren schrittweise Bewegung nur eine vernachlässigbar kleine Ungenauigkeit im Gleichlauf verursacht. Bewegt man nun den Ventilschieber des Mehrwegeventils 17 in die gegenüberliegende, linke Stellung, kann das Hydraulikfluid unter Last der Hydraulikzylinder durch die beiden Rückschlagventile 13 oder 14 zurück in den Öltank 16 der Druckmittelversorgung 12 fließen. Ist der Progressiv-Verteiler in umgekehrter Strömungsrichtung nicht selbst blockierend, kann das Hydraulikfluid auch in umgekehrter Reihenfolge der Bewegung der Verteilkolben durch die Progressiv-Verteiler abfließen. Die Rückschlagventile 13 und 14 sowie 20 und 21 erübrigen sich dann. In diesem Falle bewirkt der Progressiv-Verteiler einen doppelt wirkenden oder reversierten Gleichlauf der Hydraulikzylinder 3, 4 in beiden Verstellrichtungen.

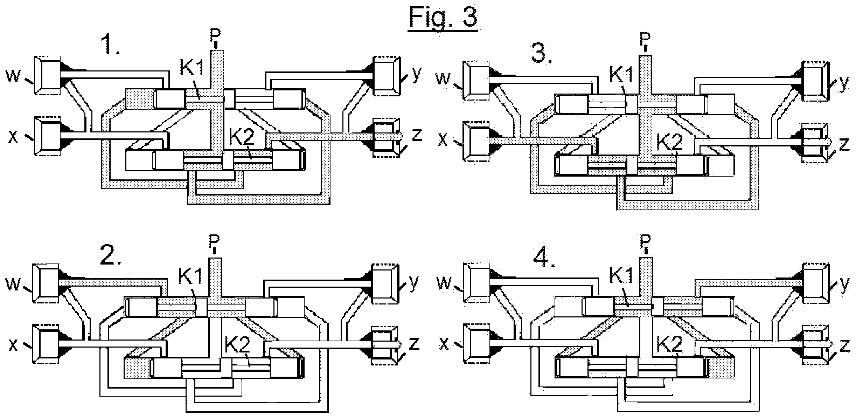

Figur 1 stellt nur ein Beispiel einer erfindungsgemäßen Schaltung dar. Je nach Anzahl der Ausgänge des Progressiv-Verteilers können noch mehr Hydraulikzylinder als dargestellt, angeschlossen oder kombiniert werden. Ebenso können mehrere Progressiv-Verteiler parallel, oder kaskadiert in Reihe geschaltet werden. Hierdurch addieren oder multiplizieren sich die Anschlussmöglichkeiten für eine Vielzahl von Hydraulikzylindern. Auch können einige Ausgänge des Progressiv-Verteilers ungenutzt über eine Rücklaufleitung mit dem Tank 16 verbunden werden. Dabei bleibt der Gleichlauf der Hydraulikzylinder, welche mit den restlichen Ausgängen des Progressiv-Verteilers verbunden sind, erhalten. Zur grundlegenden Funktionsweise eines Progressiv-Verteilers, insbesondere der Bewegung seiner Verteilkolben und deren Folgeschaltung, sei auf den oben zitierten Stand der Technik als auch auf die Beschreibung von Fig. 3 verwiesen. Mit einem Mengenbegrenzer, welcher zwischen Druckmittelversorgung 12 und Verteileinrichtung 2 geschaltet wird, kann die Stellgeschwindigkeit der Einrichtung reguliert und die Verteileinrichtung vor Überlastung geschützt werden. Eine einfache Drosselblende reicht hier beispielsweise aus.

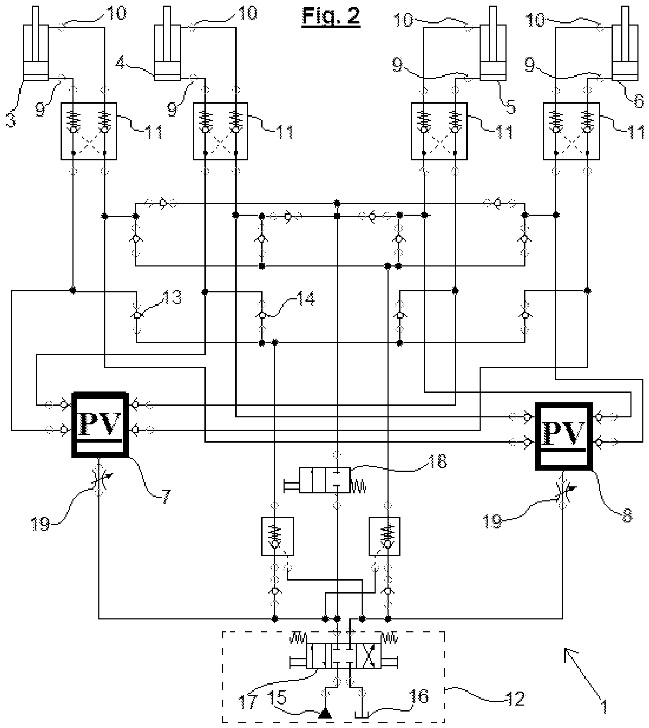

Figur 2 zeigt den schematischen Aufbau einer Stelleinrichtung 1 mit vier doppelt wirkenden Hydraulikzylindern 3, 4, 5, 6, welche zur Absicherung und Vermeidung von unkontrollierten Bewegungen, beispielsweise bei Druckverlust, jeweils mit Sperrblöcken bzw. hydraulisch entsperrbaren Rückschlagventilen 11 versehen sind. Die entsperrbaren Rückschlagventile 11 können in den Hydraulikzylindern integriert oder separat angeordnet sein. Die Druckmittelversorgung 12 ist wie zuvor in Figur 1 beschrieben ausgeführt, jedoch mit einem doppelt wirkenden Mehrwegeventil 17 versehen. Wird der Ventilschieber des Mehrwegeventiles 17 im dargestellten Schaltschema nach rechts verschoben, so fließt Hydraulikfluid unter Druck von der Pumpe 15 zum ersten Progressiv-Verteiler 7. Dabei wird der Fluidstrom durch eine Drosselblende oder eine andere, vorzugsweise einstellbare Mengenbegrenzung 19 limitiert. Der Progressiv-Verteiler 7 ist mit vier Ausgängen versehen, wobei jeweils ein Ausgang wirksam mit einer Kolbenbodenseite 9 des jeweiligen Zylinders 3, 4, 5, 6 verbunden ist. Durch die zwangsweise Bewegung der Verteilkolben innerhalb des Progressiv-Verteilers 7 fahren die Hydraulikzylinder 3, 4, 5, 6 nacheinander in kleinen Weginkrementen, beginnend von Zylinder 3 bis Zylinder 6, aus. Danach bewegt sich wieder Zylinder 3 usw., bis die ausgefahrene Endlage der Hydraulikzylinder erreicht ist. Dabei gibt jeder Sperrblock 11, welcher mit den Hydraulikzylindern 3 bis 6 verbunden ist, die Kolbenringseite 10 der jeweiligen Zylinder 3, 4, 5, 6 frei, solange er von einem Ausgang des Progressiv-Verteilers mit Druck beaufschlagt wird. Das auf der Kolbenringseite verdrängte Hydraulikfluid fließt über mehrere Leitungen, welche mit Rückschlagventilen 13, 14 untereinander verriegelt sind, durch den Mehrwegeschieber 17 in den Tank 16 der Druckmittelversorgung 12 zurück. Der Übersicht halber sind nur zwei der dargestellten Rückschlagventile 13, 14 mit Bezugszeichen versehen. Wird der Mehrwegeschieber 17 zurück in die mittlere Neutralposition bewegt, verharren alle vier Zylinder durch die vorgeschalteten Sperrblöcke 11 in einem sicheren, blockierten Zustand. Bewegt man den Ventilschieber des Mehrwegeventils 17 in die gegenüberliegende, linke Stellung, fließt Hydraulikfluid von der Pumpe 15 in den rechten Progressiv-Verteiler 8. Dabei ist der Progressiv-Verteiler 8 mit den jeweiligen Kolbenringseiten 10 der Hydraulikzylinder 3, 4, 5, 6 verbunden. Auf genau umgekehrte Weise, wie zuvor beschriebenen, fahren nun die Hydraulikzylinder inkrementell nacheinander ein, bis sie die eingefahrene Endlage erreicht haben. Bei Betätigung eines Sperrschiebers 18, welcher im Regelbetrieb geschlossen ist, können die Zylinder 3, 4, 5, 6 bei eventuell auftretenden, kleinen Leckagen zurück in eine definierte Ausgangslage gefahren werden.

Figur 3 zeigt in vier Ansichten den Fluidverlauf durch einen Progressiv-Verteiler. Ausgehend vom Eingang P wird das Fluid über die Verteilkolben K1 und K2 auf die Ausgänge w, x, y, z zwangsweise nacheinander in gleichen Mengen verteilt. Es wird vorausgesetzt, dass der Verteiler bereits in allen Kanälen befüllt ist.
In der 1. Ansicht von Fig. 3 verläuft das Fluid unter Druck von Eingang P zur rechten Seite hinter Verteilkolben K1 und schiebt diesen nach links. Das auf der linken Kolbenseite verdrängte Fluid wird über Ausgang z abgegeben. Im nächsten Schritt in der 2. Ansicht läuft das Fluid unter Druck von Eingang P zur rechten Seite hinter Verteilkolben K2 und schiebt diesen ebenfalls nach links. Das auf der linken Kolbenseite verdrängte Fluid wird über Ausgang w abgegeben.
Im dritten Schritt in der 3. Ansicht verläuft das Fluid unter Druck von Eingang P zur linken Seite hinter Verteilkolben K1 und schiebt diesen nach rechts. Das auf der rechten Kolbenseite verdrängte Fluid wird über Ausgang x abgegeben. Im letzten Schritt der Folgeschaltung in der 4. Ansicht läuft das Fluid unter Druck von Eingang P zur linken Seite hinter Verteilkolben K2 und schiebt diesen ebenfalls nach rechts. Das auf der rechten Kolbenseite verdrängte Fluid wird über Ausgang y abgegeben. Als nächstes beginnt der Vorgang von vorn, wie zuvor für die 1. Ansicht der Fig. 3 und nachfolgenden Ansichten 2. bis 4. beschrieben. Die Ausgänge w und x sowie y und z sind jeweils über einen verschließbaren Bypass miteinander parallel geschaltet. Hierdurch können zwei Hydraulikzylinder im Gleichlauf betätigt werden. Schließt man die Bypässe, können vier Hydraulikzylinder im Gleichlauf betätigt werden. Bei Rückführung des Fluidstromes eines Ausganges in den Tank können drei Zylinder im Gleichlauf betätigt werden. Ebenso können weitere Verteilkolbensegmente hinzugefügt werden. Die Anzahl möglicher Ausgänge erhöht sich entsprechend paarweise. Reversiert man den Vorgang, indem die Ausgangsanschlüsse w, x, y, z mit Fluiddruck beaufschlagt werden und der Anschluss P entlastet wird, fließt ausgehend von der 4. Ansicht in Fig. 3 Fluid durch Anschluss x hinter die rechte Seite des Verteilkolbens K1. Dieser bewegt sich nach links und verdrängt das Fluid links des Kolbens in den Anschluss P. Als nächstes wird in der 3. Ansicht Anschluss w beaufschlagt und schiebt den unteren Verteilkolben K2 nach rechts.

Das rechte Fluidvolumen des Verteilkolbens K2 wird ebenfalls in Anschluss P verdrängt. In der 2. Ansicht wird Anschluss z und Verteilkolben K1 und in der 1. Ansicht Anschluss y sowie Verteilkolben K2 beaufschlagt und verdrängen das Fluid analog in den Anschluss P. Die jeweils anderen, unter Druck stehenden Ausgänge sind durch die jeweilige Kolbenstellung und Fluidkanäle verriegelt oder die verursachten Kolbenkräfte heben sich auf. Wie eingangs beschrieben, ist nur der prinzipielle Fluidverlauf dargestellt. Sind die beiden Kolben durch hydraulische, mechanische oder geeignete Einrichtungen verriegelt, so dass sie sich nicht gleichzeitig bewegen, ist ein betriebssicheres und optional reversierbares Zwangsverteilsystem geschaffen.

**BEZUGSZEICHENLISTE**

| | |
|---|---|
| 1 | Hydraulische Stelleinrichtungen |
| 2 | Verteilereinrichtung |
| 3 | Hydraulikzylinder |
| 4 | Hydraulikzylinder |
| 5 | Hydraulikzylinder |
| 6 | Hydraulikzylinder |
| 7 | Progressiv-Verteiler |
| 8 | Progressiv-Verteiler |
| 9 | Kolbenbodenseite |
| 10 | Kolbenringseite |
| 11 | Entsperrbares Rückschlagventil, Sperrblock |
| 12 | Druckmittelversorgung |
| 13 | Rückschlagventil |
| 14 | Rückschlagventil |
| 15 | Pumpe |
| 16 | Tank, Reservoir |
| 17 | Mehrwegeventil |
| 18 | Sperrschieber |
| 19 | Mengenbegrenzung |
| 20 | Rückschlagventil |
| 21 | Rückschlagventil |
| K1 | Verteilkolben |
| K2 | Verteilkolben |
| P | Eingangsanschluss Progressiv-Verteiler |
| w | Ausgangsanschluss Progressiv-Verteiler |
| y | Ausgangsanschluss Progressiv-Verteiler |
| x | Ausgangsanschluss Progressiv-Verteiler |
| z | Ausgangsanschluss Progressiv-Verteiler |

## Patentansprüche

1. Hydraulische Stelleinrichtung (1), insbesondere zur Verwendung als Einstellsystem einer landwirtschaftlichen Maschine, bestehend aus zumindest einer steuer- oder regelbaren Druckmittelversorgung (12) und zumindest einer daran angeschlossenen Verteilereinrichtung (2), wobei mindestens ein erster und ein zweiter Hydraulikzylinder (3,4) mit der Verteilereinrichtung in hydraulischer Verbindung stehen,
**dadurch gekennzeichnet,**
**dass** die Verteilereinrichtung (2) als hydraulischer Progressiv-Verteiler (7, 8) ausgebildet ist, welcher mittels zumindest zweier Verteilkolben (K1, K2), welche in einer Folgeschaltung angeordnet sind, den Fluidstrom der Druckmittelversorgung (12) in definierten Mengen auf die Hydraulikzylinder (3, 4) aufteilt.

2. Stelleinrichtung nach Anspruch 1,
**dadurch gekennzeichnet,**
**dass** zumindest zwei Anschlüsse (w, x) der Verteilereinrichtung (2) miteinander sowie mit einem Hydraulikzylinder (3, 4) in einer Parallelschaltung verbunden sind.

3. Stelleinrichtung nach Anspruch 1 oder 2,
**dadurch gekennzeichnet,**
**dass** die Hydraulikzylinder (3, 4) über Rückschlagventile (13, 14) oder Sperrventile im Bypass zur Verteilereinrichtung (2) mit der Druckmittelversorgung (12) verbunden sind.

4. Stelleinrichtung nach einem der vorstehenden Ansprüche,
**dadurch gekennzeichnet,**
**dass** die Verteilereinrichtung (2) als hydraulischer Progressiv-Verteiler (7, 8) mit zumindest zwei Verteilkolben (K1, K2) in einer Folgeschaltung ausgeführt ist, wobei die Verteilkolben (K1, K2) durch eine mechanische Zwangssteuerung gegen eine gleichzeitige Verteilbewegung gesichert sind.

5. Stelleinrichtung nach einem der vorstehenden Ansprüche,
**dadurch gekennzeichnet,**
**dass** die Verteilkolben (K1, K2) des hydraulischen Progressiv-Verteilers (7, 8) mit variablen oder einstellbaren Endanschlägen in ihrer Hubbewegung eingeschränkt sind.

6. Stelleinrichtung nach einem der vorstehenden Ansprüche,
**dadurch gekennzeichnet,**
**dass** die Verteilereinrichtung (2) zwischen Druckmittelversorgung (12) und Hydraulikzylindern (3, 4) zumindest teilweise als Kaskade von mehreren Progressiv-Verteilern (7, 8) gebildet wird.

7. Stelleinrichtung nach einem der vorstehenden Ansprüche,
**dadurch gekennzeichnet,**
**dass** zumindest zwei der Hydraulikzylinder (3, 4) als doppelt wirkende Hydraulikzylinder ausgebildet sind und mit einer Druckmittelversorgung (12) in Verbindung stehen, dass zumindest die Kolbenbodenseiten (9) oder die Kolbenringseiten (10) der Hydraulikzylinder (3, 4) mit einer Verteilereinrichtung (2) verbunden sind.

8. Stelleinrichtung nach einem der vorstehenden Ansprüche,
**dadurch gekennzeichnet,**
**dass** die Hydraulikzylinder (3, 4) als doppelt wirkende Hydraulikzylinder auf der Kolbenbodenseite (9) und / oder der Kolbenringseite (10) mit einem Endlagenventil versehen sind, welches in einer Endlage des Hydraulikzylinders die Kolbenbodenseite (9) und die Kolbenringseite (10) hydraulisch miteinander verbinden.

9. Stelleinrichtung nach Anspruch 8,
**dadurch gekennzeichnet,**
**dass** die Kolbenbodenseiten (9) und / oder die Kolbenringseiten (10) der doppelt wirkenden Hydraulikzylinder (3, 4) über eine Verteilereinrichtung (2) oder direkt mit einer Druckmittelversorgung (12) in Verbindung stehen, wobei zumindest ein entsperrbares Rückschlagventil (11) zwischen zumindest einem Zylinder (3, 4, 5, 6) und der Verteilereinrichtung (2) und / oder der Druckmittelversorgung (12) angeordnet ist.

10. Stelleinrichtung nach einem der vorstehenden Ansprüche,
**dadurch gekennzeichnet,**
**dass** zumindest ein Hydraulikzylinder (3, 4, 5, 6) als Memory-Zylinder oder als Doppelzylinder mit einer gemeinsamen Kolbenstange ausgestattet ist.

11. Stelleinrichtung nach einem der vorstehenden Ansprüche,
**dadurch gekennzeichnet,**
**dass** zumindest ein Hydraulikzylinder (3, 4, 5, 6) mit einem Wegmesssystem ausgestattet ist, welches mit einer Anzeige-, Steuer- oder Regelvorrichtung in Verbindung steht.

12. Stelleinrichtung nach einem der vorstehenden Ansprüche,
**dadurch gekennzeichnet,**
**dass** zumindest ein Verteilkolben (K1, K2) eines Progressiv-Verteilers (7, 8) mit einem Bewegungsmesssystem versehen ist, welches mit einem Zählwerk, einer Anzeige-, Steuer- oder Regelvorrichtung in Verbindung steht.

13. Landwirtschaftliches Gerät mit einer Stelleinrichtung nach einem der vorstehenden Ansprüche,
**dadurch gekennzeichnet,**
**dass** die Stelleinrichtung (1) einer segmentweisen Druck- oder Tiefeneinstellung der Arbeits-, Ausbring- oder Tiefenführungseinrichtungen oder aber der Klapp- oder Falteinrichtung einem solchen Gerät zugeordnet ist.

14. Pflug mit einer Stelleinrichtung nach einem der vorstehenden Ansprüche,
**dadurch gekennzeichnet,**
**dass** die Stelleinrichtung (1) der parallelen Schnittbreitenverstellung mehrerer, schwenkbar zum Pflugrahmen angeordneter Pflugkörper, wobei die Pflugkörper mittels Hydraulikzylinder zum Rahmen abgestützt sind, verwendet ist.

## Claims

1. Hydraulic positioning device (1), in particular for use as a positioning system of an agricultural machine, comprising at least one controllable or regulatable pressure supply (12) and at least one distribution device (2) connected thereto, wherein at least a first and a second hydraulic cylinder (3, 4) are in hydraulic connection with the distribution device,
**characterized in that**
the distribution device (2) is designed as a hydraulic progressive distributor (7, 8) which, by means of at least two distribution pistons (K1, K2), arranged in a sequential circuit, feed the fluid flow of the pressure supply (12) to the hydraulic cylinders in defined amounts (3, 4).

2. Positioning device according to claim 1,
**characterized in that**
at least two connections (w, x) of the distribution device (2) are connected to one another and to a hydraulic cylinder (3, 4) in a parallel circuit.

3. Positioning device according to claim 1 or 2,
**characterized in that**
the hydraulic cylinders (3, 4) are connected to the pressure supply (12) via check valves (13, 14) or shut-off valves in the bypass to the distribution device (2).

4. Positioning device according to one of the preceding claims,
**characterized in that**
the distribution device (2) is designed as a hydraulic progressive distributor (7, 8) with at least two distribution pistons (K1, K2) in a sequence control circuit, wherein the distribution pistons (K1, K2) are secured by a mechanical forcing control against a simultaneous distribution movement.

5. Positioning device according to one of the preceding claims,
**characterized in that**
the distribution pistons (K1, K2) of the hydraulic progressive distributor (7, 8) with variable or adjustable end stops are limited in their stroke movement.

6. Positioning device according to one of the preceding claims,
**characterized in that**
the distribution device (2) is at least partially arranged as a cascade of several progressive distributors (7, 8) between the pressure supply (12) and the hydraulic cylinders (3, 4).

7. Positioning device according to one of the preceding claims,
**characterized in that**
at least two of the hydraulic cylinders (3, 4) are designed as double-acting hydraulic cylinders and are connected to a pressurized medium supply (12), wherein at least the piston crown sides (9) or the piston ring sides (10) of the hydraulic cylinders (3, 4) are connected to a distribution device (2).

8. Positioning device according to one of the preceding claims,
**characterized in that**
the hydraulic cylinders (3, 4) are provided as double-acting hydraulic cylinders on the piston crown side (9) and/or the piston ring side (10) with an end position valve which hydraulically connects the piston crown side (9) and the piston ring side (10) together.

9. Positioning device according to claim 8,
**characterized in that**
the piston crown sides (9) and/or the piston ring sides (10) of the double-acting hydraulic cylinders (3, 4) are connected via a distribution device (2) or directly to a pressure supply (12), wherein at least one check valve (11) is arranged between at least one cylinder (3, 4, 5, 6) and the distribution device (2) and/or the pressure supply (12).

10. Positioning device according to one of the preceding claims,
**characterized in that**
at least one hydraulic cylinder (3, 4, 5, 6) is provided as a memory cylinder or as a double cylinder with a common piston rod.

11. Positioning device according to one of the preceding claims,
**characterized in that**
at least one hydraulic cylinder (3, 4, 5, 6) is equipped with a displacement measuring system which is connected to a display, control or regulating device.

12. Positioning device according to one of the preceding claims,
**characterized in that**
at least one distributor piston (K1, K2) of a progressive distributor (7, 8) is provided with a movement measuring system which is connected to a counter, a display, control or regulating device.

13. Agricultural implement with a positioning device according to one of the preceding claims,
**characterized in that**
the positioning device (1) of a segment-wise pressure or depth adjustment of the working, dispensing or depth-guiding devices or of the folding device is assigned to such a device.

14. Plow with a positioning device according to one of the preceding claims,
**characterized in that**
the positioning device (1) is used for the parallel cutting width adjustment of a plurality of plow bodies, which are arranged to be pivotable relative to the plow frame, wherein the plow bodies are supported on the frame by means of the hydraulic cylinders.

## Revendications

1. Dispositif de réglage hydraulique (1), en particulier pour l'utilisation comme système de réglage d'une machine agricole, comprenant au moins une alimentation en fluide sous pression (12) commandable ou réglable et au moins un dispositif de distribution (2) relié à celle-ci, au moins un premier et un second vérin hydraulique (3, 4) étant en liaison hydraulique avec le dispositif de distribution,
**caractérisée en ce que**
le dispositif de distribution (2) est réalisé sous la forme d'un distributeur hydraulique progressif (7, 8) qui, au moyen d'au moins deux pistons de distribution (K1, K2) disposés en commande séquentielle, répartit le débit de fluide de l'alimentation (12) en fluide sous pression en quantités définies entre les cylindres hydrauliques (3, 4).

2. Dispositif de réglage selon la revendication 1,
**caractérisée en ce qu'au**
moins deux raccords (w, x) du dispositif de distribution (2) sont reliés entre eux et à un vérin hydraulique (3, 4) en circuit parallèle.

3. Dispositif de réglage selon la revendication 1 ou 2,
**caractérisée en ce que**
les vérins hydrauliques (3, 4) sont reliés à l'alimentation en fluide sous pression (12) par des clapets anti-retour (13, 14) ou des vannes d'arrêt dans le by-pass au dispositif de distribution (2).

4. Dispositif de réglage selon l'une des revendications ci-dessus,
**caractérisée en ce que**
le dispositif de distribution (2) est réalisé sous la forme d'un distributeur hydraulique progressif (7, 8) avec au moins deux pistons de distribution (K1, K2) dans un circuit séquentiel, les pistons de distribution (K1, K2) étant protégés contre un mouvement de distribution simultané par une commande forcée mécanique.

5. Dispositif de réglage selon l'une des revendications ci-dessus,
**caractérisée en ce que**
les pistons de distribution (K1, K2) du distributeur progressif hydraulique (7, 8) à butées de fin de course variables ou réglables sont limités dans leur course.

6. Dispositif de réglage selon l'une des revendications ci-dessus,
**caractérisée en ce que**
le dispositif de distribution (2) entre l'alimentation en fluide sous pression (12) et les vérins hydrauliques (3, 4) est formé au moins partiellement en cascade d'une pluralité de distributeurs progressifs (7, 8).

7. Dispositif de réglage selon l'une des revendications ci-dessus,
**caractérisée en ce qu'au**
moins deux des vérins hydrauliques (3, 4) sont réalisés sous la forme de vérins hydrauliques à double effet et sont reliés à une alimentation en fluide sous pression (12), **en ce qu'**au moins les côtés pistons (9) ou les côtés piston-tiges (10) des vérins hydrauliques (3, 4) sont reliés à un dispositif distributeur (2).

8. Dispositif de réglage selon l'une des revendications ci-dessus,
**caractérisée en ce que**
les vérins hydrauliques (3, 4) sont pourvus d'une soupape de fin de course qui, dans une position finale du vérin hydraulique, relie hydrauliquement entre eux le côté piston (9) et le côté piston-tige (10).

9. Dispositif de réglage selon la revendication 8,
**caractérisée en ce que**
les côtés pistons (9) et/ou les côtés piston-tiges (10) des vérins hydrauliques à double effet (3, 4) sont reliés par un dispositif de distribution (2) ou directement à une alimentation en fluide sous pression (12), au moins un clapet anti-retour piloté (11) étant disposé entre au moins un cylindre (3, 4, 5, 6) et le dispositif de distribution (2) et/ou l'alimentation en fluide sous pression (12).

10. Dispositif de réglage selon l'une des revendications ci-dessus,
**caractérisée en ce qu'au**
moins un vérin hydraulique (3, 4, 5, 6) est équipé comme vérin Memory ou comme vérin double avec une tige de piston commune.

11. Dispositif de réglage selon l'une des revendications ci-dessus,
**caractérisée en ce qu'au**
moins un vérin hydraulique (3, 4, 5, 6) est équipé d'un système de mesure de déplacement qui est relié à un dispositif d'affichage, de commande ou de régulation.

12. Dispositif de réglage selon l'une des revendications ci-dessus,
**caractérisée en ce qu'au**
moins un piston de distribution (K1, K2) d'un distributeur progressif (7, 8) est muni d'un système de mesure de mouvement qui est relié à un compteur, un dispositif d'affichage, de commande ou de régulation.

13. Machine agricole avec dispositif de réglage selon l'une des revendications ci-dessus,
**caractérisée en ce que**
le dispositif de réglage (1) est affecté à un réglage segmentaire de pression ou de profondeur des dispositifs de commande de travail, de décharge ou de profondeur ou, cependant, du dispositif de pliage ou de pliage, à un tel appareil.

14. Charrue avec un dispositif de réglage selon l'une des revendications ci-dessus,
**caractérisée en ce qu'on**
utilise le dispositif de réglage (1) du réglage parallèle de la largeur de travail d'une pluralité de corps de charrue qui sont disposés de manière pivotante par rapport au châssis de charrue, les corps de charrue étant soutenus par rapport au châssis au moyen de cylindres hydrauliques.
